(19) Europäisches Patentamt
European Patent Office
Office européen des brevets

(11) Veröffentlichungsnummer: **0 020 302**
**B1**

(12) **EUROPÄISCHE PATENTSCHRIFT**

(45) Veröffentlichungstag der Patentschrift: **25.08.82**

(51) Int. Cl.³: **C 09 B 57/04**, C 07 D 401/12, C 08 K 5/34

(21) Anmeldenummer: **80810170.3**

(22) Anmeldetag: **22.05.80**

(54) **Isoindolinazin-Nickel-Komplex, Verfahren zu seiner Herstellung sowie seine Verwendung beim Pigmentieren hochmolekularen organischen Materials und dieses hochmolekularen organischen Material.**

(30) Priorität: **29.05.79 CH 4996/79**

(43) Veröffentlichungstag der Anmeldung: **10.12.80 Patentblatt 80/25**

(45) Bekanntmachung des Hinweises auf die Patenterteilung: **25.08.82 Patentblatt 82/34**

(84) Benannte Vertragsstaaten: **CH DE FR GB IT LI**

(56) Entgegenhaltungen:
**CH-A-599 309**
**DE-A-2 142 245**
**DE-A-2 504 321**
**FR-A-2 243 235**
**FR-A-2 283 891**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Patentabteilung Postfach, CH-4002 Basel (CH)**

(72) Erfinder: **Lienhard, Paul, Dr., Kirschgartenstrasse 14, CH-4402 Frenkendorf (CH)**
Erfinder: **L'Eplattenier, François, Dr., Im Wylacker 19, CH-4106 Therwil (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 020 302 B1

# Isoindolinazin-Nickel-Komplex, Verfahren zu seiner Herstellung sowie seine Verwendung beim Pigmentieren hochmolekularen organischen Materials und dieses hochmolekularen organischen Materials

Die Erfindung betrifft den Isoindolinazin-Nickelkomplex der Formel

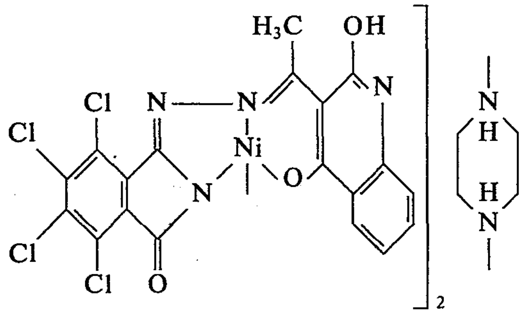

(I)

Die Verbindung der Formel I erhält man durch Umsetzen des Liganden der Formel II

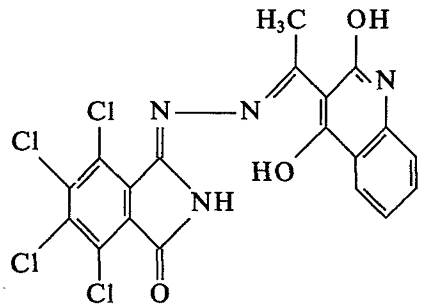

(II)

mit einem nickelabgebenden Mittel und Piperazin im Molverhältnis 2 : 2 : 1.

Zum Liganden der Formel II gelangt man nach an sich bekanntem Verfahren durch Kondensation des bekannten 4,5,6,7-Tetrachlor-isoindolin-1-on-3-yliden-hydrazins mit 3-Acetyl-2,4-dihydroxy-chinolin, vorzugsweise bei erhöhter Temperatur in einem organischen Lösungsmittel, wie Alkohol, Eisessig, Dioxan, Dimethylformamid, N-Methylpyrrolidon, Butyrolacton, Glykol, Glycolmonoäthyläther, Chlorbenzol oder o-Dichlorbenzol.

Da das erhaltene Azin in den erwähnten Lösungsmitteln schwer löslich ist, läßt es sich leicht durch Filtration isolieren.

Auch die Umsetzung des Liganden der Formel II mit dem nickelabgebenden Mittel und dem Piperazin erfolgt zweckmäßig bei erhöhter Temperatur, vorzugsweise zwischen 50 bis 150° C in einem der oben erwähnten organischen Lösungsmittel.

Als nickelabgebendes Mittel verwendet man zweckmäßig die Salze des Nickels, insbesondere die Formiate, Acetate oder Stearate.

Die Isoindolinazin-Nickelkomplex der Formel I stellt ein farbstarkes gelbes Pigment dar, welches in feinverteilter Form zum Pigmentieren von hochmolekularem organischem Material verwendet werden kann, z. B. Celluloseäther und -ester, wie Äthylcellulose, Nitrocellulose, Celluloseacetat, Cellulosebutyrat, natürliche Harze oder Kunstharze, wie Polymerisationsharze oder Kondensationsharze, z. B. Aminoplaste, insbesondere Harnstoff- und Melamin-Formaldehydharze, Alkydharze, Phenoplaste, Polycarbonate, Polyolefine, wie Polystyrol, Polyvinylchlorid, Polyäthylen, Polypropylen, Polyacrylnitril, Polyacrylsäureester, Polyamiden, Polyurethanen oder Polyester, Gummi, Casein, Silikon und Silikonharzen einzeln oder in Mischungen.

Die erwähnten hochmolekularen Verbindungen können sowohl als plastische Massen, Schmelzen oder in Form von Spinnlösungen, Lacken, Anstrichstoffen oder Druckfarben vorliegen. Je nach Verwendungszweck erweist es sich als vorteilhaft, die neuen Pigmente als Toner oder in Form von Präparaten zu verwenden.

Die erhaltenen Färbungen zeichnen sich durch hohe Farbstärke, reine Nuance, gute Licht-, Wetter-, Hitze-, Überlackier- und Migrationsechtheit sowie durch einen guten Glanz aus.

Der Komplex der Formel I ist in Lacken und Kunststoffen leicht dispergierbar. Lackanreibungen zeichnen sich durch ein günstiges Fließverhalten aus.

Gegenüber dem in der DE-OS 2 538 034, Beispiel 81 beschriebenen Pigment zeichnet sich das erfindungsgemäß durch eine höhere Farbstärke und leichtere Zugänglichkeit aus.

In den nachfolgenden Beispielen bedeuten, sofern nichts anderes angegeben wird, die Prozente Gewichtsprozent und die Temperaturen sind in Celsiusgraden angegeben.

## Beispiel 1

61 g 3-Acetyl-2,4-dihydroxychinolin und 90 g 4,5,6,7-Tetrachlor-isoindolin-1-on-3-yliden-hydrazin werden in 2500 ml Äthylenglykolmonoäthyläther eingerührt und die Mischung bis zur gleichmäßigen Verteilung gerührt. Dann erhitzt man sie auf 100 bis 110° und rührt sie weitere 3 Stunden. Es entsteht ein gelbes Reaktionsprodukt (Ligand), das heiß abfiltriert, mit Äthylenglykolmonoäthyläther und Methanol gewaschen und bei 80° im Vakuum getrocknet wird. Trockengewicht: 130 oder 90% der Theorie.

Elementaranalyse $C_{19}H_{10}Cl_4N_4O_3$:

| | | | |
|---|---|---|---|
| ber. | C 47,14, | H 2,08, | N 11,57%, |
| gef. | C 46,9, | H 2,2, | N 11,6%. |

77,4 g fein pulverisierter Ligand werden in 2500 ml Dimethylformamid angeschlämmt mit 6,9 g Piperazin versetzt und 15 Minuten bei Raumtemperatur gerührt. Zur Suspension gibt man 44 g Nickelacetattetrahydrat, erwärmt die Mischung im Verlaufe 1 Stunde auf 100 bis 110° und rührt sie weitere 3 Stunden bei dieser Temperatur. Dann filtriert man heiß, wäscht das Produkt gründlich mit Dimethylformamid, Methanol und Aceton und trocknet es im Vakuum bei 80 bis 90°. Man erhält 90,5 g (96,8% der Theorie) eines farbstarken gelben Pigmentes.

Elementaranalyse $C_{42}H_{28}Cl_8N_{10}Ni_2O_6$:

| | | | | | |
|---|---|---|---|---|---|
| ber. | C 43,20, | H 2,24, | N 11,99, | Cl 24,29, | Ni 10,06 |
| gef. | C 43,3, | H 2,3, | N 12,1, | Cl 23,8, | Ni 9,62 |

## Beispiel 2

2 g des nach Beispiel 1 hergestellten Pigments werden mit 36 g Tonerdedehydrat, 60 g Leinölfirnis von mittlerer Viskosität und 2 g Kobaltlinoleat auf dem Dreiwalzenstuhl angerieben. Die mit der entstehenden Farbpaste erzeugten gelben Drucke sind farbstark und hervorragend lichtecht.

## Beispiel 3

0,6 g des nach Beispiel 1 hergestellten Pigments werden mit 67 g Polyvinylchlorid, 33 g Dioctylphthalat, 2 g Dibutylzinndilaurat und 2 g Titandioxyd zusammengemischt und auf einem Walzenstuhl während 15 Minuten bei 160° zu einer dünnen Folie verarbeitet. Die so erzeugte gelbe Färbung ist farbstark, migrations-, hitze- und lichtecht.

## Beispiel 4

10 g Titandioxyd und 2 g des nach Beispiel 1 hergestellten Pigments werden mit 88 g einer Mischung von 26,4 g Kokosalkydharz, 24,0 g Melamin-Formaldehydharz (50% Festkörpergehalt), 8,8 g Äthylenglykolmonomethyläther und 28,8 g Xylol während 48 Stunden in einer Kugelmühle vermahlen.

Wird dieser Lack auf eine Aluminiumfolie gespritzt, 30 Minuten bei Raumtemperatur vorgetrocknet und dann während 30 Minuten bei 120° eingebrannt, dann erhält man eine Gelblackierung, die sich bei guter Farbstärke durch eine sehr gute Überlackier-, Licht- und Wetterechtheit auszeichnet.

**Patentansprüche**

1. Der Isoindolinazin-Nickelkomplex der Formel

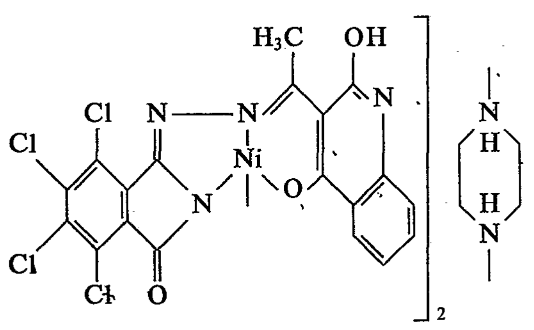

2. Verfahren zur Herstellung eines Isoindolin-Nickelkomplexes gemäß Anspruch 1, dadurch gekennzeichnet, daß man den Liganden der Formel

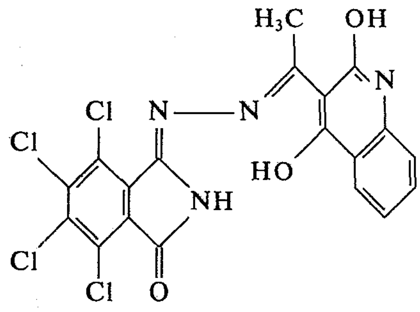

mit einem nickelabgebenden Mittel und Piperazin im Molverhältnis 2 : 2 : 1 umsetzt.

3. Verfahren zum Pigmentieren von hochmolekularem organischem Material, gekennzeichnet durch die Verwendung des Pigmentes gemäß Anspruch 1.

4. Hochmolekulares organisches Material enthaltend die Verbindung gemäß Anspruch 1.

**Claims**

1. The isoindoline-azine nickel complex of the formula

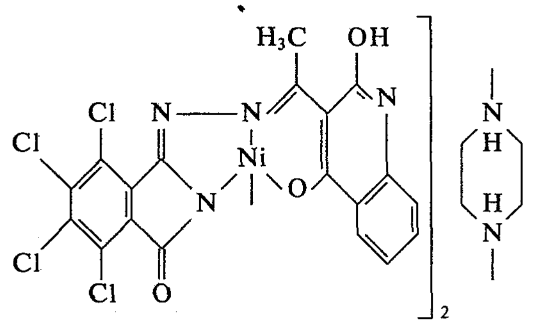

2. A process for the manufacture of an isoindoline-azine nickel complex according to claim 1, which process comprises reacting the ligand of the formula

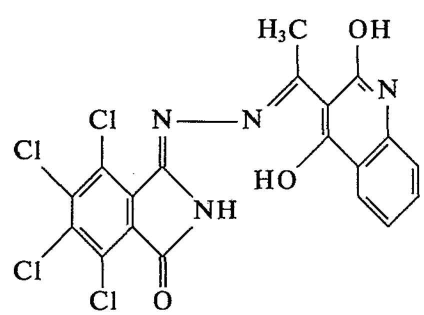

with a nickel donor and piperazine in the molar ratio 2 : 2 : 1.

3. A process for pigmenting organic material of high molecular weight, which comprises the use of the pigment according to claim 1.

4. Organic material of high molecular weight containing the compound according to claim 1.

**Revendications**

1. Complexe de nickel dérivant d'une iso-indoline-azine, complexe qui répond à la formule suivante:

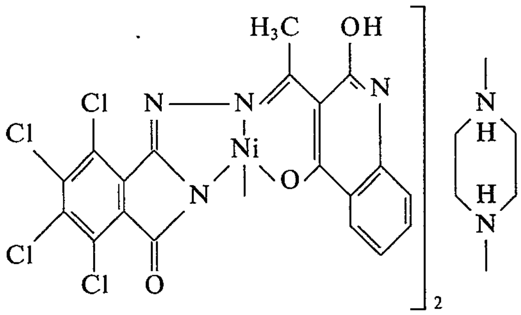

2. Procédé de préparation d'un complexe du nickel et de l'iso-indoline selon la revendication 1, procédé caractérisé en ce qu'on fait réagir le coordinat de formule:

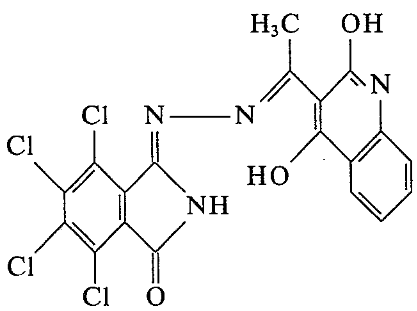

avec un agent cédant du nickel et la pipérazine dans un rapport molaire de 2 : 2 : 1.

3. Procédé pour pigmenter des matières organiques à haut poids moléculaire, procédé caractérisé en ce qu'on utilise le pigment défini à la revendication 1.

4. Matières organiques à haut poids moléculaire, qui contiennent le composé défini à la revendication 1.